# FASCICULE DE BREVET EUROPEEN

(11) **EP 2 980 946 B1**
(45) Date de publication et mention de la délivrance du brevet: **23.08.2017**
(21) Numéro de dépôt: 15179362.7
(22) Date de dépôt: 31.07.2015
(51) Int. Cl.: H02J 1/12, H02J 9/04, B64D 41/00, H02M 3/04, H02J 1/00, H02M 7/02

(54) **RESEAU ELECTRIQUE D'UN AERONEF**
ELEKTRISCHES NETZ EINES LUFTFAHRZEUGS
AIRCRAFT ELECTRICAL NETWORK

(30) Priorité: 01.08.2014 FR 1401776
(43) Date de publication de la demande: 03.02.2016
(73) Titulaire: THALES, 92400 Courbevoie (FR)
(72) Inventeur: LACAUX, Frédéric, 78400 CHATOU (FR); BRUZY, Christophe, 78400 CHATOU (FR); THALIN, Pascal, 78400 CHATOU (FR)
(74) Mandataire: Collet, Alain

(56) Documents cités:
- FR-A1- 2 911 442
- FR-A1- 2 930 084

## Description

### Etat de l'art de l'invention

L'invention concerne la conversion de puissance électrique appliquée aux systèmes aéronautiques et plus précisément la mise en oeuvre de réseaux de bords de secours basse tension continu utilisant des batteries. A ce jour, de nombreux aéronefs utilisent des réseaux 28V continus ou 28Vdc. Ces réseaux sont connus sous le nom de LVDC pour leur abréviation anglo-saxonne : Low Voltage Direct Current. Des exemples de réseaux électriques d'aéronefs sont donnés dans les documents FR 2 930 084 A1 et FR 2 911 442 A1.

L'architecture des avions évolue actuellement vers une plus grande utilisation de l'énergie électrique. Le besoin en système de conversion et stockage d'énergie est donc aussi en train d'évoluer due à l'électrification de systèmes utilisant habituellement de l'énergie pneumatique ou hydraulique. L'apparition de nouvelles applications de haute criticité nécessitant de fonctionner à partir d'une source électrique normale et/ou de secours, complexifie la structure des réseaux électriques. Ces nouvelles applications imposent de nouvelles contraintes difficilement compatibles avec les réseaux électriques normaux et de secours actuels.

Des réseaux continus haute tension sont mis en oeuvre à bord des aéronefs modernes. Une tension couramment employée est de 540V continu (540Vdc). On envisage également des tensions de 350Vdc et de 270Vdc. Ces réseaux sont connus sous le nom de HVDC pour leur abréviation anglo-saxonne ; High Voltage Direct Current.

Des actionneurs électriques sont de plus en plus employés, notamment pour les freins du train d'atterrissage ou les commandes de vol. Parmi ceux-ci, on trouve notamment, des actionneurs électromécaniques, connus sous le nom de EMA (Electro-Mechanical Actuators), des actionneurs électro-hydrauliques connus sous le nom de EHA (Electro-Hydrostatic Actuators) et des actionneurs hydraulique à secours électrique connus sous le nom de EBHA (Electrical Back-up Hydraulic Actuators). Ces actionneurs sont généralement alimentés au moyen d'un réseau continu haute tension HVDC. Par ailleurs, d'autres types de charges, comme notamment les calculateurs avioniques, utilisent généralement un réseau continu basse tension. On ressent donc un besoin d'hybridation des types de réseaux aussi bien en fonctionnement normal qu'en secours.

L'utilisation de stockage d'énergie sous forme de batteries 28Vdc est classique pour les réseaux électriques d'avions. En fonctionnement normal les batteries sont chargées par un réseau continu basse tension LVDC et en secours, on y puise de l'énergie pour alimenter des réseaux de secours. Le réseau continu basse tension de secours puise son énergie directement dans une batterie tandis qu'un convertisseur élévateur dédié permet d'alimenter le réseau continu haute tension à partir d'une batterie. La multiplication de convertisseurs dédiés pour chaque système représente un coût de développement / maintenance et un poids significatifs. L'adoption de techniques de conversion avancées comme l'entrelaçage ou la commutation douce permet de limiter le poids et de volume de ces réseaux. Cependant les coûts et le poids de ces réseaux restent élevés.

Actuellement, en fonctionnement normal un convertisseur est associé à une charge. Pour assurer le fonctionnement en secours, un second convertisseur est la plus part du temps ajouté pour alimenter une même charge. Par exemple, le système de freinage (ou les commandes de vol) est alimenté en fonctionnement normal directement par des réseaux HVDC. En mode de freinage secours ou dans le cas où le réseau principal alternatif haute tension, connu sous le nom de HVAC pour son abréviation anglo-saxonne ; High Voltage Alternating Current, n'est pas disponible, des convertisseurs de secours spécifiques sont utilisés pour convertir l'énergie venant de la batterie 28Vdc et créer une tension HVDC. Le système de freinage est connu sous le nom d'EBAC pour son abréviation anglo-saxonne: Electrical Brake Actuation Controller.

De même le système de démarrage du groupe auxiliaire de puissance, connu sous le nom d'APU pour son abréviation anglo-saxonne : Auxiliary Power Unit, est alimenté en fonctionnement normal par un réseau principal HVAC. En absence de réseau HVAC le système de démarrage de l'APU est alimenté par un réseau LVDC au travers d'un convertisseur élévateur LVDC/HVDC spécifique.

L'association d'un convertisseur spécifique pour chacune des fonctions de conversions associées aux freinages électriques normal et de secours, au démarrage de l'APU sur batterie, à l'alimentation des charges 28Vdc à partir du réseau principal HVAC présente plusieurs inconvénients. Le poids de convertisseurs embarqués est important du au manque d'optimisation de la puissance de conversion installée par rapport au besoin instantané. La proportion du poids des convertisseurs élévateurs est significative représentant presque 50% du poids du système complet. De plus les convertisseurs sont spécifiques à leurs fonctions rendant les coûts de développements et de maintenance relativement élevés. L'utilisation extensive de convertisseurs dédiés dans les réseaux 28Vdc implique un coût et un poids important pour ces systèmes.

Enfin certaines applications nécessitent un taux de disponibilité important difficile à respecter avec un seul convertisseur. La perte du convertisseur représente la perte de la charge associée, ceci conduit donc à l'utilisation de convertisseur de secours pour les applications à criticité élevée augmentant encore le poids et le coût associé.

Dans les systèmes électriques 28Vdc embarqués sur avion, les systèmes de secours et de démarrage de l'APU utilisent des convertisseurs élévateurs dédiés pour créer une tension HVDC à partir de batteries 28Vdc. Ces convertisseurs opèrent uniquement pendant des phases de vols particulières et durant des périodes de temps relativement courtes. Les convertisseurs élévateurs associés au système de secours et démarrage de l'APU ont donc un rapport d'utilisation très faible. En dehors de leurs périodes d'opérations courtes ils représentent un poids morts pour l'avion.

En fonctionnement normal, le système de conversion principal utilise des convertisseurs de puissance pour transformer le réseau principal HVAC ou HVDC en 28Vdc régulé. Dans le cas du réseau HVAC, la conversion est réalisée en deux temps, HVAC en HVDC et HVDC en 28Vdc. En cas de secours ou d'absence du réseau HVAC, les utilisateurs 28Vdc sont directement alimentés à partir des batteries laissant les convertisseurs HVDC / 28vdc principaux inutilisés.

En fonctionnement de secours ou en absence du réseau principal, les systèmes de freins électriques EBAC ou de commande de vols utilisent des convertisseurs de secours dédiés pour convertir l'énergie venant d'une des batterie 28Vdc en HVDC. De façon similaire, en absence du réseau de bord principal HVAC le système de démarrage de l'APU utilise un convertisseur de démarrage dédié pour convertir l'énergie venant d'un des batterie 28Vdc en HVDC.

### Résumé de l'invention

L'invention vise à pallier tout ou partie des problèmes cités plus haut en proposant un réseau électrique embarqué à bord d'un aéronef mettant à profit la complémentarité de certaines applications. Ces applications sont susceptibles de partager les mêmes ressources de conversions.

L'invention repose sur la mutualisation et le partage dynamique de convertisseurs de puissances génériques entres différents consommateurs notamment ceux alimentés à partir des batteries 28Vdc.

A cet effet, l'invention a pour objet un réseau électrique d'un aéronef comprenant :
- plusieurs générateurs principaux,
- plusieurs réseaux continu haute tension HVDC alimenté chacun par un des générateurs en fonctionnement normal,
- plusieurs réseaux continu basse tension LVDC alimenté chacun à un des réseaux continus haute tension HVDC,
- plusieurs convertisseurs permettant chacun de transférer de l'énergie d'un des réseaux continu haute tension HVDC vers un des réseaux continu basse tension LVDC, les différents convertisseurs étant indépendants et isolés les uns des autres, chaque convertisseur étant dédié à un des réseaux haute tension HVDC et au réseau continu basse tension LVDC,
- une charge destinée à être alimentée en fonctionnement normal par les générateurs principaux et en fonctionnement secours par l'un des réseaux continu basse tension LVDC, le fonctionnement secours étant mis en place lorsqu'au moins un des réseaux haute tension HVDC n'est plus alimenté par le générateur principal associé en fonctionnement normal,
dans lequel les convertisseurs sont réversibles et caractérisé en ce qu'en fonctionnement secours, la charge est alimentée en parallèle par plusieurs parmi les réseaux continu haute tension HVDC dont l'énergie provient des réseaux continu basse tension LVDC

En se basant sur une structure de convertisseurs HVDC / LVDC réversibles, il est possible de mutualiser les convertisseurs de secours et de démarrage avec les convertisseurs principaux nécessaire pour le conditionnement d'énergie en fonctionnement normal. Ceci permet de ne pas avoir de convertisseurs dédiés pour les systèmes de secours ou de démarrage qui représenteraient un poids morts significatif pénalisant l'aéronef. Enfin certaines applications comme le démarrage de l'APU ont des besoins de puissance très élevés pour de courtes durées, le système peut paralléliser plusieurs convertisseurs principaux pour cette phase d'opération permettant d'éviter de pénaliser leur définition pour des cas de surcharges particulières.

La charge est par exemple un générateur auxiliaire APU.

Avantageusement les convertisseurs ont chacun une impédance de sortie apparente non nulle définie de façon à permettre une mise en parallèle de plusieurs convertisseurs sans moyens de contrôle communs aux différents convertisseurs.

Chacun des convertisseurs peut être configuré pour limiter l'intensité qu'il est susceptible de délivrer à une valeur maximum.

L'impédance de sortie apparente présente avantageusement une augmentation de valeur au delà d'une intensité prédéfinie délivrée par le convertisseur considéré.

Le réseau électrique peut comprendre entre chacun des réseaux continu haute tension HVDC et la charge une distribution secondaire permettant soit d'isoler soit de raccorder la charge et le réseau continu haute tension HVDC considéré. La charge peut être alimentée en parallèle par plusieurs parmi les différents réseaux continu haute tension HVDC au travers de la distribution secondaire.

Le réseau électrique comprend avantageusement un module de pilotage de la distribution secondaire configuré pour autoriser la fermeture de contacteurs si les générateurs principaux ne délivrent pas de puissance vers les réseaux continu haute tension HVDC.

La charge dite première charge peut utiliser plusieurs convertisseurs en parallèle et le réseau peut comprendre en outre :
- plusieurs secondes charges utilisant les convertisseurs indépendamment les uns des autres et destinés à être alimentés séparément par les réseaux continu haute tension HVDC,
- des moyens de gestion de priorité entre la première charge et les secondes charges.

Les secondes charges peuvent être des systèmes de freinage EBAC destinés à freiner des roues d'un train d'atterrissage de l'aéronef.

Le réseau électrique peut comprendre en outre :
- plusieurs batteries chacune raccordée à un des réseaux continu basse tension LVDC,
- des moyens de gestion de la charge des batteries permettant de conserver une charge minimum suffisante pour alimenter les freins électrique.

Le réseau électrique peut comprendre en outre :
- un système avionique pouvant être raccordé en fonctionnement de secours à un des réseaux continu basse tension LVDC,
- au moins une batterie (30) pouvant être dédiée au système avionique.

### Brève description des figures

L'invention sera mieux comprise et d'autres avantages apparaîtront à la lecture de la description détaillée d'un mode de réalisation donné à titre d'exemple, description illustrée par le dessin joint dans lequel :
la figure 1 représente un exemple de réseau électrique selon l'invention ;
la figure 2 représente une variante du réseau de la figure 1 ;
la figure 3 représente une courbe caractéristique d'un convertisseur mis en oeuvre dans l'un des réseau des figures 1 ou 2 ;
la figure 4 représente plusieurs convertisseurs alimentant en parallèle une même charge ;
la figure 5 représente le pilotage d'un des convertisseurs alimentant en parallèle une même charge ;
la figure 6 représente de façon schématique la commande de contacteurs du réseau.

Par souci de clarté, les mêmes éléments porteront les mêmes repères dans les différentes figures.

### Description détaillée de l'invention

De façon générale pour la suite de la description de la présente invention, on distingue deux types de réseaux continu, haute et basse tension HVDC et LVDC. La tension la plus couramment utilisée actuellement pour les réseaux HVDC est de 540Vdc et est de 28Vdc pour les réseaux LVDC. Il est bien entendu que l'invention peut être mise en oeuvre quelque soit les valeurs des tensions de ces deux types de réseaux, la tension du réseau haute tension étant supérieure à la tension du réseau basse tension.

### Mutualisation de convertisseurs du réseau

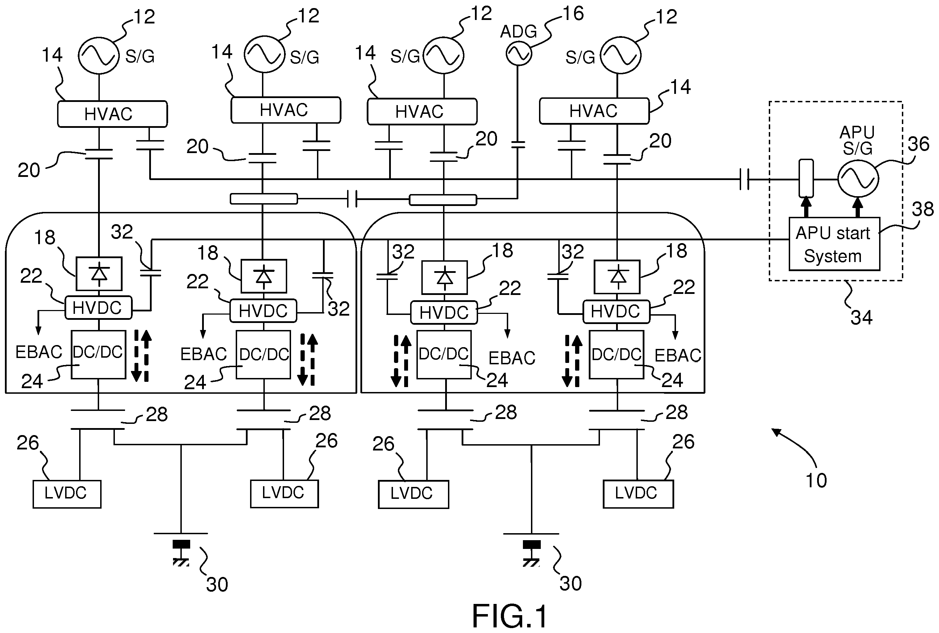

La figure 1 représente un exemple de réseau électrique 10 selon l'invention pouvant être mis en oeuvre dans un avion gros porteur possédant quatre générateurs principaux 12 permettant de délivrer chacun une tension alternative de 230V vers un réseau principal HVAC 14. Un aérogénérateur 16 connu sous le nom de ADG pour son abréviation anglo-saxonne : Air Driven Generator peut également délivrer, en cas de dernier secours, une tension alternative de 230V. Chacun des réseaux HVAC 14 est associé à un redresseur 18 par l'intermédiaire d'un contacteur 20 pour former quatre réseaux continus 22 haute tension HVDC 540Vdc. Le contacteur 20 est par exemple réalisé à partir d'un transistor de puissance de type MOS FET ou d'un relais électromécanique. Par la suite d'autres contacteurs seront décrits et peuvent être mis en oeuvre au moyen des mêmes techniques. Chacun des réseaux HVDC 22 permet d'alimenter des charges particulières utilisant la haute tension continue HVDC, comme par exemple les commandes de vol ou les systèmes de freins électriques EBAC. Par la suite, on ne décrira que l'alimentation des freins électriques EBAC. Il est bien entendu que l'on peut généraliser cette utilisation à toute charge raccordée à l'un des réseaux HVDC et ne nécessitant pas une puissance supérieure à la puissance maximale délivrable par le réseaux considéré pris isolément.

Quatre convertisseurs continu/continu 24 permettent de convertir les tensions présentes sur chacun des réseaux HVDC 22 pour former quatre réseaux 26 continus basse tension LVDC. Entre chacun des convertisseurs 24 et les réseaux LVDC 26 correspondants, des contacteurs 28 peuvent aiguiller la tension issu de chacun des convertisseurs 24 soit vers le réseau LVDC 26 correspondant soit vers une batterie 30. Les batteries 30 peuvent être communes à plusieurs réseaux LVDC 26. Dans l'exemple représenté, une batterie 30 est commune à deux réseaux LVDC 26.

L'invention est illustrée avec quatre réseaux LVDC 26 et deux batteries 30. Il est bien entendu possible de concevoir un réseau selon l'invention avec un nombre de batteries 30 différent. On peut par exemple mettre en oeuvre une batterie par réseau LVDC 26. De même le nombre de réseaux LVDC peut varier sans sortir du cadre de l'invention. De plus, les batteries 30 et les convertisseurs 24 et les redresseurs 18 peuvent être regroupés dans un centre de puissance électrique disposé dans un endroit précis de l'aéronef. Il est également possible de distribuer spatialement dans l'aéronef les différents constituants du réseau électrique. La structure des contacteurs est à adapter en fonction du nombre et de l'emplacement des batteries 30 des convertisseurs 24 et des redresseurs.

On définit deux types de fonctionnement pour le réseau électrique 10. Un fonctionnement normal est effectif lorsque les générateurs principaux 12 fonctionnent et alimentent chacun un des réseaux HVDC 22. Chaque convertisseur 24 est dédié à un des réseaux LVDC 26. Les charges alimentées par un des réseaux LVDC 26 ne peuvent pas être alimentées par un autre des réseaux LVDC 26. Un fonctionnement de secours se met en place lors d'un dysfonctionnement des générateurs principaux 12 ou plus généralement lorsque les réseaux HVDC 22 ne sont plus alimentés par les générateur principaux, par exemple en cas de coupure d'un réseau HVAC 14 ou en cas de panne d'un redresseur 18.

En fonctionnement normal, les convertisseurs 24 sont indépendants les uns des autres. Les convertisseurs 24 sont isolés électriquement les uns des autres.

Selon l'invention, les convertisseurs 24 sont réversibles de façon à permettre la génération de hautes tension HVDC à partir des réseaux LVDC 26. Ainsi en fonctionnement secours, des charges alimentées par les réseaux HVDC 22 peuvent poursuivre leur fonctionnement normalement.

Le réseau électrique 10 comprend un autre générateur appelé générateur auxiliaire 34 appelé APU utilisé lorsque l'aéronef est au sol ou en vol lorsque les générateur principaux 12 sont hors service. L'APU comprend généralement une turbine alimenté par le carburant de l'aéronef et un alternateur 36 permettant d'alimenter le ou les réseaux HVAC 14. L'APU 34 dispose d'un système de démarrage électrique 38 pouvant être alimenté par les batteries 30. Dans l'art antérieur, le système de démarrage 38 de l'APU 34 dispose d'un convertisseur dédié puisant son énergie directement dans les batteries 30. Selon l'invention, le système de démarrage 38 est alimenté en parallèle par plusieurs parmi les réseaux HVDC 22 dont l'énergie provient des réseaux LVDC 26 au travers des convertisseurs 24. Ceci est rendu possible par le fait que les convertisseurs 24 sont bidirectionnels. Des contacteurs 32 assurent la connexion des différents réseaux HVDC 22 au système de démarrage 38.

L'invention permet la mutualisation des convertisseurs 24 de façon à optimiser le poids et le volume des éléments de conversion. En partant de l'architecture état de l'art pour les systèmes LVDC embarqués sur avion, l'utilisation de système de conversions modulaire permet de mutualiser les convertisseurs de secours dédiés au freinage électrique EBAC et les convertisseurs du système de démarrage 38 de l'APU. Tout d'abord, les convertisseurs 24 remplissent des fonctions de conversions similaires transformant la tension LVDC en HVDC. De plus les profils de mission des applications peuvent être opérationnellement considérée complémentaires. Enfin les besoins en puissance sont similaires. Par exemple, pour un avion de ligne à deux couloirs, (connu dans la littérature anglo-saxonne sous le nom de : « twin-aisle aircraft »), les quatre voies de freinage EBAC nécessitent une puissance totale de l'ordre de 16kW pendant 1 min alors que le démarrage de l'APU nécessite une puissance totale d'environ 15kW pendant 45sec. La complémentarité des profils de mission, la similarité de la nature de la conversion et du besoin en puissance rendent les applications de freinage et de démarrage de l'APU des candidats au partage de ressources de conversion. Le système modulaire de conversion permet le partage de ressource de conversion entre les différents utilisateurs candidats au partage. Les éléments de distribution réalisent l'aiguillage de l'énergie des sources vers les consommateurs et les éléments de conversion sont utilisés pour le conditionnement de l'énergie sous formes adéquates pour les utilisateurs.

En fonctionnement normal, les quatre redresseurs 18 transforment le réseau principal HVAC en HVDC pour alimenter le système de freinage EBAC et les convertisseurs 24 délivrant la tension LVDC. Les convertisseurs fonctionnent en abaisseur de tension. Le système de démarrage de l'APU est alimenté directement par un ou plusieurs des réseaux HVDC 22 raccordés en parallèle.

En fonctionnement de secours, les quatre convertisseurs 24 fonctionnent en élévateur de tension et sont utilisés pour convertir l'énergie provenant des batteries 30 et générer des tensions HVDC, une pour chacun des réseaux HVDC 22.

Sans sortir du cadre de l'invention, il est possible que le nombre de batteries 30 et l'allocation des convertisseurs 24 dans les différents modes de fonctionnement puissent être changés en adaptant le pilotage des contacteurs 28 et 32.

L'invention est décrite à partir de charges tels que l'APU nécessitant la mise en oeuvre de plusieurs convertisseurs connectés en parallèle et les freins électriques EBAC n'utilisant qu'un seul convertisseur 24 par voie de freinage. L'invention peut aussi être mise en oeuvre pour d'autres charges de l'aéronef. On distingue simplement les deux types de charges, celle n'utilisant qu'un seul convertisseur 24 et celles nécessitant la mise en oeuvre de plusieurs convertisseurs connectés en parallèle.

De, même les différentes charges nécessitant la mise en oeuvre de plusieurs convertisseurs connectés en parallèle peuvent utiliser chacune des nombre différents de convertisseurs.

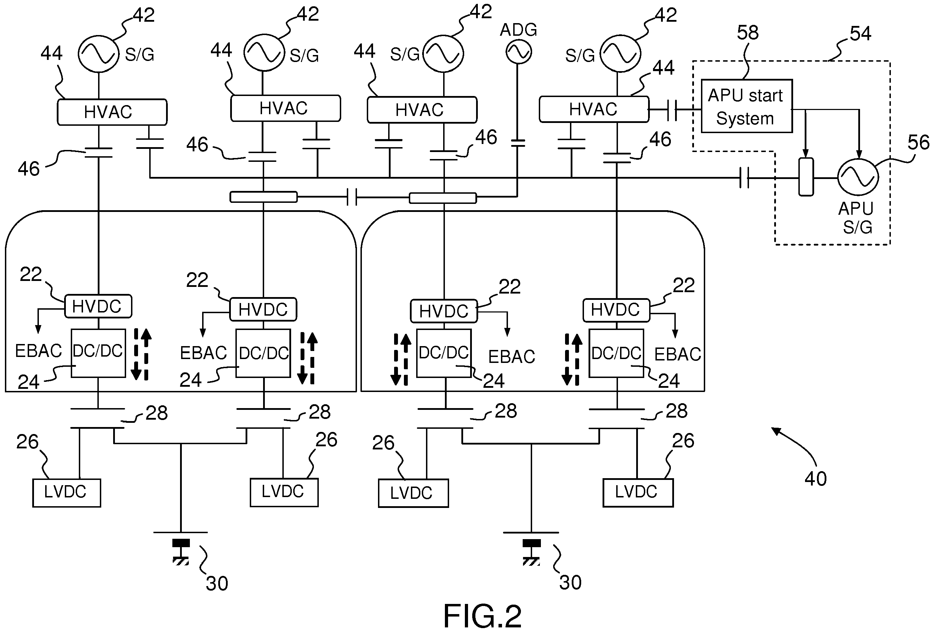

La figure 2 représente un réseau électrique 40 dans lequel quatre générateurs principaux 42 délivrent directement une tension continue HVDC à quatre réseaux principaux 44 HVDC raccordés chacun aux réseaux HVDC 22 par l'intermédiaire de contacteur 46. Dans le réseau électrique 40, on retrouve les convertisseurs 24, les réseaux LVDC 26, les contacteurs 28 et la batterie 30. Le réseau électrique 40 comprend également un APU 54 dont le système de démarrage 56 est alimenté en fonctionnement normal par les réseaux principaux HVDC 44. Alternativement, toujours en fonctionnement normal, le système de démarrage 56 peut être alimenté par les réseaux HVDC 22. L'APU 54 comprend une génératrice à courant continu 56 permettant d'alimenter les différents réseaux principaux HVDC 44.

Le fonctionnement de secours du réseau électrique 40 est semblable à celui du réseau 10 de la figure1. Le système de démarrage 56 est alimenté en secours par les batteries 30 au travers des convertisseurs 24.

### Mise en parallèle des convertisseurs et indépendance

La mise en parallèle des convertisseurs 24 est une partie importante de l'invention. La mise en parallèle de convertisseurs 24 est délicate à mettre en oeuvre du au partage de courants entre les différents convertisseurs parallélisés. Il est possible de prévoir un module de contrôle commun aux différents convertisseurs destinés à travailler en parallèle.

Plus précisément, un contrôle de type Maître/Esclave permet d'envoyer des consignes de courant dérivées par un contrôleur central à l'ensemble des convertisseurs. L'avantage majeur de cette approche est le partage de courant idéal entre les convertisseurs.

Néanmoins, dans le domaine aéronautique, il est important de conserver une indépendance la plus grande possible entre les différents réseaux et entre les différents convertisseurs. Cette indépendance est nécessaire pour la sécurité de fonctionnement et la disponibilité du système de freinage. En effet, ce système comprend quatre voies qu'il est souhaitable de conserver les plus indépendantes possibles. En cas de panne d'une des voies, les autres peuvent rester opérationnelles. Une indisponibilité d'un module de contrôle commun aux différents convertisseurs pourrait entrainer perte de l'ensemble des convertisseurs et notamment compromettre toutes les voies du système de freinage. Il est donc difficile de conserver l'indépendance des convertisseurs avec ce type de contrôle. Cela impose une conception particulière du module commun entrainant des surcoûts importants pour assurer une fiabilité suffisante.

De plus, les fait de mutualiser les convertisseurs pour des charges de nature différente, rend délicat la réalisation de l'indépendance des réseaux et des convertisseurs. Certaines charges comme les systèmes de freinage EBAC utilisent les convertisseurs indépendamment les uns des autres et d'autres charges comme le système de démarrage de l'APU utilisent plusieurs convertisseurs en parallèle. Les modes de contrôle des convertisseurs parallélisés doivent assurer le partage de courant tout en conservant leur indépendance.

De façon plus générale, l'indépendance en fonctionnement normal des réseaux continus haute tension HVAC vers les réseaux continus basse tension LVDC 28Vdc est très importantes pour la sécurité avion. Les charges directement alimentés en 28Vdc sont pour la plupart des charges critiques pour la sécurité de l'avion comme notamment les calculateurs de vols ou les écrans pilotes. La pertes de l'ensemble des 4 voies de conversions de HVAC vers LVDC 28Vdc crée une menace importante pour la sécurité de l'avion et peut compromettre significativement l'opération de l'avion. Il est critique de conserver l'indépendance en fonctionnement normal des quatre voies afin de ne pas créer de point commun pouvant entrainer la perte de l'ensemble de bus LVDC 28Vdc.

Avantageusement pour conserver cette indépendance, les convertisseurs 24 possèdent chacun une impédance de sortie apparente non nulle définie de façon à permettre une mise en parallèle de plusieurs convertisseurs 24 sans moyens de contrôle communs aux différents convertisseurs 24. Une telle impédance permet d'équilibrer l'intensité que chacun délivre lorsque les sorties des convertisseurs 24 sont raccordées. L'impédance est par exemple de type résistive. Cette caractéristique non idéale des convertisseurs 24 permet l'équilibrage de leur sortie sans aucune communication entre les différents convertisseurs et permet donc de conserver une indépendance totale entre convertisseurs lors de leur fonctionnement en parallèle.

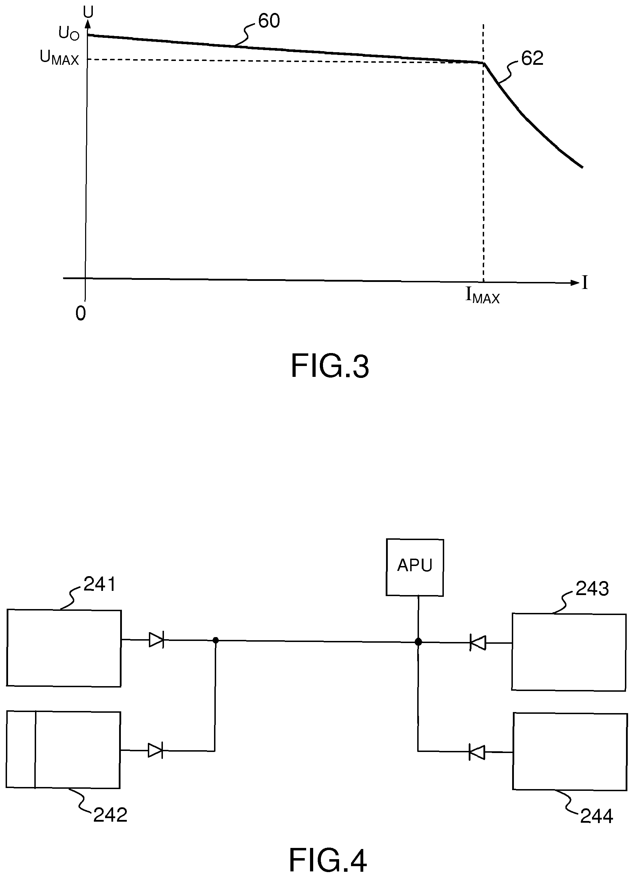

La figure 3 représente pour un convertisseur 24, sa tension de sortie U en fonction de l'intensité I qu'il délivre. Sur sa plage de fonctionnement, lorsque l'intensité est inférieure à une valeur I_{MAX}, la tension U est décroissante. Cette décroissance est comparable à celle obtenue avec la présence d'une impédance de sortie non nulle. Cette impédance peut être une résistance placée en série à la sortie du convertisseur. Elle est avantageusement générée par des moyens de contrôle du convertisseur. En effet, la présence d'une impédance physique dégrade le rendement du réseau. La tension de sortie du convertisseur est notée U₀ pour un courant de sortie nul et U_{MAX} pour le courant I_{MAX}. La tension U_{MAX} est supérieure à la tension U₀. Un écart entre les intensités des courants délivrés par les différents convertisseurs 24 mis en parallèle est inévitable. On prend soin de définir les tolérances des tensions U₀ et U_{MAX} de façon à ce que les intensités des courants délivrés par les différents convertisseurs ne dépasse pas une valeur maximum admissible afin de ne pas risquer d'endommager un ces convertisseurs 24 par une surintensité.

On peut élargir les tolérances sur les caractéristiques en limitant la puissance maximale que peut délivrer un des convertisseurs au moyen d'une augmentation de l'impédance apparente au-delà de la valeur d'intensité I_{MAX}. Plus précisément, entre une intensité nulle et IMAX, la première partie 60 de la courbe représentée sur la figure 3 présente une décroissance qui est constante représentative d'une impédance constante. Au-delà de l'intensité I_{MAX}, la seconde partie 62 de la courbe présente une pente plus importante pour être représentative d'une impédance plus forte. Ainsi, lorsqu'un premier des convertisseurs 24 atteint l'intensité I_{MAX}, la puissance supplémentaire nécessaire à l'alimentation de la charge est fournie par les autres convertisseurs 24 connectés en parallèle du premier.

La figure 4 illustre la limitation de puissance de quatre convertisseurs 24, référencés ici 241, 242, 243 et 244, et alimentant en parallèle l'APU. Les convertisseurs 241, 243 et 244 délivrent leur puissance maximale et le convertisseur 242 complète la puissance nécessaire au fonctionnement de l'APU.

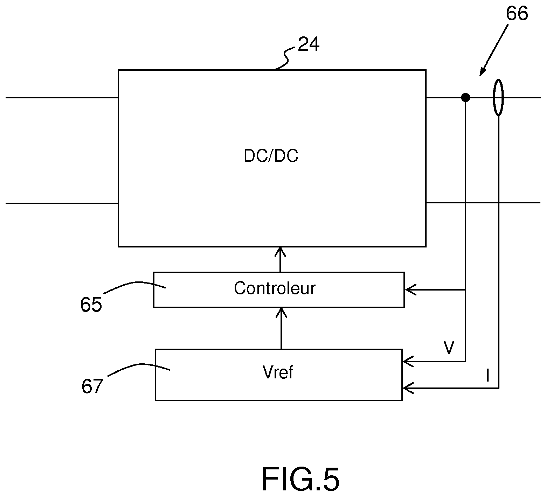

La figure 5 représente schématiquement un convertisseur 24 et ses moyens de contrôle permettant de générer une impédance de sortie apparente non nulle. Le convertisseur 24 comprend plusieurs interrupteurs électroniques pilotés par un contrôleur 65 délivrant aux interrupteurs des ordres de fermetures et d'ouverture de façon à former à la sortie 66 du convertisseur une tension V. Le contrôleur 65 reçoit la tension de sortie V et une tension de référence Vref. Le contrôleur 65 pilote le convertisseur 24 en asservissant la tension V sur la tension Vref. Pour une impédance de sortie nulle, la tension Vref est constante. Au contraire pour obtenir une impédance de sortie apparente non nulle, la tension Vref est variable en fonction de l'intensité du courant I délivré à la sortie 66 du convertisseur 24. Plus précisément un générateur de tension de référence 67 reçoit une mesure de la tension de sortie V et une mesure de l'intensité I délivrée par le convertisseur 24. Le générateur 67 délivre au contrôleur 65 une tension Vref fonction des deux mesures qu'il reçoit. La fonction est par exemple définie de façon à ce que l'intensité I et la tension U suivent la courbe de la figure 3. D'autres courbes sont bien entendu possibles.

### Gestion des priorités

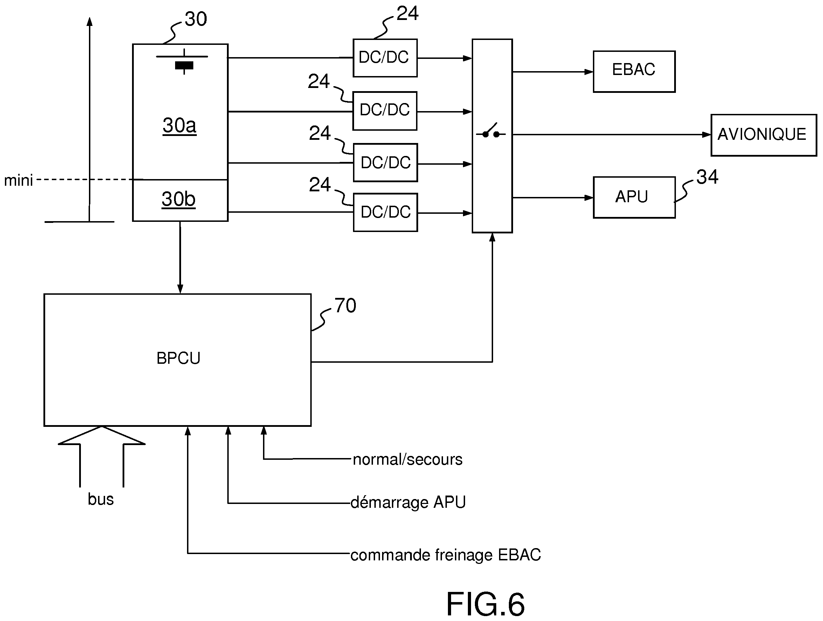

La figure 6 représente sous forme schématique la commande des différents contacteurs du réseau électrique. Cette commande s'applique pour les deux types de réseaux 10 ou 40. On s'intéresse à la commande du système de démarrage de l'APU et des freins électriques EBAC.

Les convertisseurs 24 sont dynamiquement partagés entre le système de freinage EBAC, et le système de démarrage de l'APU en fonction des modes d'opération du système avion. La différence de criticité entre les deux charges (critique pour le frein, essentiel pour le démarrage APU) impose d'arbitrer les priorités entre les deux charges en cas de demande simultanée. La gestion des priorités pour le partage des ressources de conversions est faite au niveau du réseau par le contrôle d'une distribution secondaire comprenant essentiellement les contacteurs 32 dans la variante de la figure 1. Un module 70 de gestion de priorités peut être implémenté comme une unité indépendante ou dans un organe de gestion du réseau déjà présent dans l'aéronef et appelé BPCU pour son abréviation anglo-saxonne : Bus Power Control Unit. Le module 70 reçoit différentes informations dont le niveau de charge de la ou des batteries 30, le mode de fonctionnement : normal ou secours, la demande de démarrage de l'APU par le pilote, la commande de freinage EBAC. D'autres informations peuvent arriver au module 70 par un bus. Le module 70 pilote la distribution secondaire et notamment les contacteurs 32.

Pendant les phases de freinage, les convertisseurs 24 sont alloués au système de freinage EBAC avec entière priorité, le système de démarrage de l'APU est désactivé et ne peut pas opérer tant que le système de freinage est activé. Les convertisseurs 24 sont déconnectés du système de freinage uniquement durant les phases ou le système de freinage n'est pas actif et le système de démarrage de l'APU peut alors être activé.

Lorsque le système de démarrage de l'APU est activé et le système de freinage EBAC est inactif, la distribution secondaire connecte en parallèle les quatre convertisseurs 24 au système de démarrage de l'APU. Si le système de freinage EBAC est activé durant un démarrage de l'APU, le système de freinage EBAC prend la priorité immédiatement et le démarrage de l'APU est avorté au moyen de la distribution secondaire. Les convertisseurs 24 sont rendu immédiatement disponibles pour le système de freinage EBAC tandis que le système de démarrage de l'APU est suspendu.

Le système de freinage EBAC et de démarrage de l'APU partagent potentiellement, en plus des ressources de conversions 24, le même stockage d'énergie sous la forme de la ou des batteries 30. Sur la figure 5, une seule batterie 30 est représentée. Dans la pratique, comme par exemple représenté sur les figures 1 et 2, il peut s'agir de plusieurs batteries 30 distinctes dont la charge globale est surveillée globalement.

La différence de criticité entre les deux applications, système de freinage EBAC et de démarrage de l'APU, impose aussi d'arbitrer les priorités entre les deux systèmes en termes d'accès à l'énergie de secours disponible dans la batterie 30 en cas de scénario d'urgence. Dans le cas du fonctionnement en secours, le pilote de l'aéronef peut essayer de redémarrer l'APU plusieurs fois jusqu'à potentiellement décharger complètement la batterie 30 si le système ne l'interdit pas. Le système de freinage EBAC étant une fonction critique et nécessaire pour assurer l'atterrissage en toute sécurité de l'aéronef, il est primordial de garantir que la quantité d'énergie nécessaire à son fonctionnement est réservée dans le cas du fonctionnement en secours. Dans ce mode de fonctionnement, la batterie 30 est virtuellement partitionnée en deux sous partition 30a et 30b, 30a pour le système démarrage de l'APU et 30b entièrement réservée au système de freinage EBAC. En fonction de l'énergie disponible dans la batterie 30, le module 70 peut interdire d'alimenter le système de démarrage de l'APU et de conserver l'énergie nécessaire pour le système de freinage EBAC.

### Alimentation de systèmes avioniques

Les convertisseurs 24 utilisent la batterie 28Vdc 30 pour le système de freinage EBAC et le démarrage de l'APU. Ces deux charges forment des charges haute puissance nécessitant une qualité de réseau adaptée en termes de tension basse et de microcoupure. On doit pouvoir permettre l'extraction du maximum de puissance possible de la batterie 30 pour alimenter ce type de charge.

L'aéronef dispose par ailleurs d'un système appelé système avionique comprenant des charges de type ordinateur. Il s'agit principalement d'instruments de vol et de navigation mettant en oeuvre des calculateurs qui nécessite une alimentation électrique particulière. En fonctionnement de secours, il est possible d'alimenter les charges de type avioniques avec la même batterie que les charges haute puissance. Néanmoins, le fait d'extraire une puissance importante de la batterie peut abaisser sa tension en dessous d'un seuil de tolérance pour les charges de type avionique.

Avantageusement, les charges avioniques sont alimentées par une des batteries 30 dédiée avec une qualité de réseau adapté aux charges de type ordinateur. Le découplage des charges de haute puissance et des charges de type avioniques permet d'optimiser les caractéristiques des batteries en permettant les charges hautes puissances d'extraire les maximum de puissance sans contrainte de tension minimum imposée par des charges de type avioniques. Les charges avioniques sont ainsi isolées de toutes perturbations créées par les charges hautes puissances (microcoupure, baisse de tension...).

Par exemple, dans le cas de batterie ayant une tension nominale de 28Vdc, le seuil bas de tension pour les charges de types avioniques peut être fixé à 25Vdc. Une batterie désignée pour fournir 15kW avec une tension min de 20Vdc n'est capable de fournir que 10kW avec une tension min de 25Vdc. En supposant à 15kW le besoin durant le démarrage de l'APU et à 5kW le besoin des charges avioniques. Dans les cas ou les batteries sont mutualisée en permanence entre les charges haute puissance et avioniques, deux batteries de 10kW avec une tension minimum de 25Vdc sont nécessaires. Par contre dans le cas où une batterie est utilisée pour les charges hautes puissances et une batterie pour les charges avioniques, une batterie de 15kW avec une tension min de 20Vdc (équivalente à une batterie 10kW avec une tension min de 25Vdc) pour les charges hautes puissances, une batterie 5kW avec une tension min de 25Vdc pour les charges de type avioniques sont nécessaires. Ceci permet donc une optimisation significative du poids et du volume des batteries embarquées en réduisant le besoin en de puissance et capacité embarquée.

L'allocation d'une des batteries 30 aux charges avioniques peut se faire de façon dynamique par le module 70. Plus précisément, tant que la charge globale des batteries 30 permet l'alimentation des charges haute puissance sans baisse de tension en dessous du seuil de tolérance des charges avioniques, on conserve l'ensemble des batteries 30 mutualisées. Dès que la charge globale des batteries 30 nécessite une baisse de tension importante, le module 70 isole une batterie 30 pour la réserver aux charges avioniques et utilise les batteries 30 restantes pour les charges haute puissance.

L'allocation dynamique peut autoriser en cas de situation critique, au-delà d'une situation de fonctionnement de secours sur batterie, à supprimer l'allocation d'une batterie dédiée aux charges avioniques pour la réaffecter aux charges haute puissance. Plus précisément, on peut autoriser la perte des systèmes avioniques en cas de besoin extrême en freinage électrique EBAC.

## Revendications

1. Réseau électrique d'un aéronef comprenant
• plusieurs générateurs principaux (12 ; 42),
• plusieurs réseaux continu haute tension HVDC (22) alimenté chacun par un des générateurs (12 ; 42) en fonctionnement normal,
• plusieurs réseaux continu basse tension LVDC (26) alimenté chacun à un des réseaux continus haute tension HVDC (22),
• plusieurs convertisseurs (24) permettant chacun de transférer de l'énergie d'un des réseaux continu haute tension HVDC (22) vers un des réseaux continu basse tension LVDC (26), les différents convertisseurs (24) étant indépendants et isolés les uns des autres, chaque convertisseur (24) étant dédié à un des réseaux haute tension HVDC (22) et au réseau continu basse tension LVDC (26),
• une charge (38, 58) destinée à être alimentée en fonctionnement normal par les générateurs principaux (12 ; 42) et en fonctionnement secours par l'un des réseaux continu basse tension LVDC (26), le fonctionnement secours étant mis en place lorsqu'au moins un des réseaux haute tension HVDC (22) n'est plus alimenté par le générateur principal (12 ; 42) associé en fonctionnement normal, dans lequel les convertisseurs (24) sont réversibles et
**caractérisé en ce que** qu'en fonctionnement secours, la charge (38, 58) est alimentée en parallèle par plusieurs parmi les réseaux continu haute tension HVDC (22) dont l'énergie provient des réseaux continu basse tension LVDC (26).

2. Réseau électrique selon la revendication 1, dans lequel la charge est un générateur auxiliaire APU (34, 54).

3. Réseau électrique selon l'une des revendications précédentes, dans lequel les convertisseurs (24) ont chacun une impédance de sortie apparente non nulle définie de façon à permettre une mise en parallèle de plusieurs convertisseurs (24) sans moyens de contrôle communs aux différents convertisseurs (24).

4. Réseau électrique selon la revendication 3, dans lequel l'impédance de sortie apparente présente une augmentation de valeur au delà d'une intensité (I_{MAX}) prédéfinie délivrée par le convertisseur (24) considéré.

5. Réseau électrique selon l'une des revendications précédentes, dans lequel chacun des convertisseurs (24) est configuré pour limiter l'intensité qu'il est susceptible de délivrer à une valeur maximum.

6. Réseau électrique selon l'une des revendications précédentes, comprenant en outre, entre chacun des réseaux continu haute tension HVDC (22) et la charge (38, 58) une distribution secondaire comprenant plusieurs contacteurs (32) et permettant soit d'isoler soit de raccorder la charge (38, 58) et le réseau continu haute tension HVDC (22) considéré et dans lequel la charge (38, 58) peut être alimentée en parallèle par plusieurs parmi les différents réseaux continu haute tension HVDC (22) au travers de la distribution secondaire (32).

7. Réseau électrique selon la revendication 6, comprenant en outre un module de pilotage (70) de la distribution secondaire configuré pour autoriser la fermeture de contacteurs (32) si les générateurs principaux (12 ; 42) ne délivrent pas de puissance vers les réseaux continu haute tension HVDC (22).

8. Réseau électrique selon l'une des revendications précédentes, dans lequel la charge dite première charge utilise plusieurs convertisseurs en parallèle et dans lequel le réseau comprend en outre :
• plusieurs secondes charges (EBAC) utilisant les convertisseurs indépendamment les uns des autres et destinés à être alimentés séparément par les réseaux continu haute tension HVDC (22),
• des moyens de gestion de priorité entre la première charge (38 ; 58) et les secondes charges (EBAC).

9. Réseau électrique selon la revendication 8, dans lequel les secondes charges sont des systèmes de freinage EBAC destinés à freiner des roues d'un train d'atterrissage de l'aéronef.

10. Réseau électrique selon la revendication 9, comprenant en outre :
• plusieurs batteries (30) chacune raccordée à un des réseaux continu basse tension LVDC (28),
• des moyens (70) de gestion de la charge des batteries (30) permettant de conserver une charge minimum suffisante pour alimenter les freins électrique (EBAC).

11. Réseau électrique selon l'une des revendications précédentes, comprenant en outre :
• un système avionique pouvant être raccordé en fonctionnement de secours à un des réseaux continu basse tension LVDC (28),
• au moins une batterie (30) pouvant être dédiée au système avionique.

## Patentansprüche

1. Elektrisches Netzwerk für ein Luftfahrzeug, das Folgendes umfasst:
• mehrere Hauptgeneratoren (12; 42);
• mehrere Hochspannungsgleichstromnetze HVDC (22), die jeweils von einem der Generatoren (12; 42) im normalen Betrieb gespeist werden;
• mehrere Niederspannungsgleichstromnetze LVDC (26), die jeweils von einem der Hochspannungsgleichstromnetze HVDC (22) gespeist werden;
• mehrere Wandler (24), die jeweils eine Übertragung von Leistung von einem der Hochspannungsgleichstromnetze HVDC (22) zu einem der Niederspannungsgleichstromnetze LVDC (26) zulassen, wobei die verschiedenen Wandler (24) voneinander unabhängig und isoliert sind, wobei jeder Wandler (24) für eines der Hochspannungsnetze HVDC (22) und das Niederspannungsgleichstromnetz LVDC (26) dediziert ist;
• eine Last (38, 58), die im normalen Betrieb von den Hauptgeneratoren (12; 42) und im Reservebetrieb von einem der Niederspannungsgleichstromnetze LVDC (26) zu speisen ist, wobei der Reservebetrieb dann implementiert wird, wenn wenigstens eines der Hochspannungsnetze HVDC (22) nicht mehr von dem assoziierten Hauptgenerator (12; 42) im normalen Betrieb gespeist wird,
wobei die Wandler (24) reversibel sind, und **dadurch gekennzeichnet, dass** im Reservebetrieb die Last (38, 58) parallel von mehreren Hochspannungsgleichstromnetzen HVDC (22) gespeist wird, deren Leistung von den Niederspannungsgleichstromnetzen LVDC (26) stammt.

2. Elektrisches Netzwerk nach Anspruch 1, wobei die Last ein Zusatzgenerator APU (34, 54) ist.

3. Elektrisches Netzwerk nach einem der vorherigen Ansprüche, wobei die Wandler (24) jeweils einen Ausgangsscheinwiderstand von ungleich Null haben, der so definiert ist, dass mehrere Wandler (24) parallel ohne Steuermittel platziert werden können, die den verschiedenen Wandlern (24) gemeinsam sind.

4. Elektrisches Netzwerk nach Anspruch 3, wobei der Ausgangsscheinwiderstand eine Zunahme des Wertes über eine von dem betrachteten Wandler (24) gelieferte vordefinierte Intensität (I_{MAX}) hinaus aufweist.

5. Elektrisches Netzwerk nach einem der vorherigen Ansprüche, wobei jeder der Wandler (24) zum Begrenzen der Intensität konfiguriert ist, die wahrscheinlich einen Maximalwert liefern wird.

6. Elektrisches Netzwerk nach einem der vorherigen Ansprüche, das ferner zwischen jedem der Hochspannungsgleichstromnetze HVDC (22) und der Last (38, 58) eine sekundäre Verteilung aufweist, die mehrere Schütze (32) umfasst und entweder die Isolation oder die Verbindung der Last (38, 58) und des betrachteten Hochspannungsgleichstromnetzes HVDC (22) zulässt, wobei die Last (38, 58) parallel von mehreren verschiedenen Hochspannungsgleichstromnetzen HVDC (22) durch die sekundäre Verteilung (32) gespeist werden kann.

7. Elektrisches Netzwerk nach Anspruch 6, das ferner ein Steuermodul (70) für die sekundäre Verteilung umfasst, das zum Autorisieren des Schließens von Schützen (32) konfiguriert ist, wenn die Hauptgeneratoren (12; 42) keine Leistung zu den Hochspannungsgleichstromnetzen HVDC (22) liefern.

8. Elektrisches Netzwerk nach einem der vorherigen Ansprüche, wobei die Last, erste Last genannt, mehrere Wandler parallel benutzt, und dadurch, wobei das Netzwerk ferner Folgendes umfasst:
• mehrere zweite Lasten (EBAC), die die Wandler unabhängig voneinander benutzen und zum separaten Speisen durch die Hochspannungsgleichstromnetze HVDC (22) gedacht sind;
• Mittel zum Verwalten von Priorität zwischen den ersten (38; 58) und den zweiten Lasten (EBAC).

9. Elektrisches Netzwerk nach Anspruch 8, wobei die zweiten Lasten Bremssysteme EBAC zum Bremsen der Räder eines Fahrwerks des Luftfahrzeugs sind.

10. Elektrisches Netzwerk nach Anspruch 9, das ferner Folgendes umfasst:
• mehrere Batterien (30), die jeweils mit einem der Niederspannungsgleichstromnetze LVDC (28) verbunden sind;
• Mittel (70) zum Verwalten der Last der Batterien (30), so dass eine minimale Last aufrechterhalten werden kann, die zum Speisen der elektrischen Bremsen (EBAC) ausreicht.

11. Elektrisches Netzwerk nach einem der vorherigen Ansprüche, das ferner Folgendes umfasst:
• ein Avioniksystem, das im Reservebetrieb mit einem der Niederspannungsgleichstromnetze LVDC (28) verbunden werden kann;
• wenigstens eine Batterie (30), die für das Avioniksystem dediziert werden kann.

## Claims

1. An electrical network for an aircraft comprising:
• a plurality of main generators (12; 42);
• a plurality of high voltage direct current networks HVDC (22), each powered by one of said generators (12; 42) in normal operation;
• a plurality of low voltage direct current networks LVDC (26), each powered by one of said high voltage direct networks HVDC (22);
• a plurality of converters (24), each allowing power to be transferred from one of said high voltage direct current networks HVDC (22) to one of said low voltage direct current networks LVDC (26), said various converters (24) being independent and isolated from each other, each converter (24) being dedicated to one of said high voltage networks HVDC (22) and to said low voltage direct current network LVDC (26);
• a load (38, 58) intended to be powered in normal operation by said main generators (12; 42) and in backup operation by one of said low voltage direct current networks LVDC (26), the backup operation being implemented when at least one of said high voltage networks HVDC (22) is no longer powered by the associated main generator (12; 42) in normal operation,
wherein said converters (24) are reversible, and **characterised in that**, in backup operation, said load (38, 58) is powered in parallel by a plurality of said high voltage direct current networks HVDC (22), the power of which originates from said low voltage direct current networks LVDC (26).

2. The electrical network according to claim 1, wherein said load is an auxiliary generator APU (34, 54).

3. The electrical network according to any one of the preceding claims, wherein said converters (24) each have a non-zero apparent output impedance that is defined to allow a plurality of converters (24) to be placed in parallel without control means common to said various converters (24).

4. The electrical network according to claim 3, wherein the apparent output impedance exhibits an increase in value beyond a predefined intensity (I_{MAX}) delivered by the considered converter (24).

5. The electrical network according to any one of the preceding claims, wherein each of said converters (24) is configured to limit the intensity that it is likely to deliver to a maximum value.

6. The electrical network according to any one of the preceding claims, further comprising, between each of said high voltage direct current networks HVDC (22) and said load (38, 58), a secondary distribution comprising a plurality of contactors (32) and allowing either the isolation or the connection of said load (38, 58) and said considered high voltage direct current network HVDC (22) and in which said load (38, 58) can be powered in parallel by a plurality of said various high voltage direct current networks HVDC (22) through said secondary distribution (32).

7. The electrical network according to claim 6, further comprising a control module (70) for said secondary distribution that is configured to authorise the closure of contactors (32) if said main generators (12; 42) do not deliver power to said high voltage direct current networks HVDC (22).

8. The electrical network according to any one of the preceding claims, wherein said load, called first load, uses a plurality of converters in parallel and wherein said network further comprises:
• a plurality of second loads (EBAC) using said converters independently of each other and intended to be powered separately by said high voltage direct current networks HVDC (22);
• means for managing the priority between said first load (38; 58) and said second loads (EBAC).

9. The electrical network according to claim 8, wherein said second loads are braking systems EBAC intended to brake the wheels of a set of landing gear of said aircraft.

10. The electrical network according to claim 9, further comprising:
• a plurality of batteries (30), each connected to one of said low voltage direct current networks LVDC (28);
• means (70) for managing the load of said batteries (30), allowing a minimum load to be maintained that is sufficient to power the electric brakes (EBAC).

11. The electrical network according to any one of the preceding claims, further comprising:
• an avionics system that can be connected in backup operation to one of said low voltage direct current networks LVDC (28);
• at least one battery (30) that can be dedicated to said avionics system.
